# EUROPEAN PATENT APPLICATION

(11) **EP 2 699 022 A1**
(43) Date of publication of application: **19.02.2014**
(21) Application number: 12306005.5
(22) Date of filing: 16.08.2012
(51) Int. Cl.: H04R 29/00, H04L 29/08

(54) **Method for provisioning a person with information associated with an event**

(71) Applicant: Alcatel Lucent, 75007 Paris (FR)
(72) Inventor: Lou, Zhe, 2640 Mortsel (BE); Wu, Tingyao, 3001 Leuven (BE)
(74) Representative: ALU Antw Patent Attorneys

(57) **Abstract**

The present invention relates to a method for provisioning a person with information associated with an event wherein the method comprises the steps of detecting a person involved in the event, subsequently determining a geo-location of said person involved in said event and controlling the provisioning of directional information at the geo-location of the person involved in the event. The directional information may be provided to the person via a directional speaker, or as a message sent to the person's mobile wireless communications device. Detecting the person may be based on images on a scene, captured by a camera, and may involve face detection, gaze detection or head tracking.

## Description

The present invention relates to a method for provisioning a person with information associated with an event as described in the preamble of claim 1, a related system for provisioning a person with information associated with an event as described in the preamble of claim 3 and a related device as described in the preamble of claim 8.

Such a method and a related system for provisioning a person with information associated with an event is well known in the art e.g. from advertisement boards that are put everywhere on the street to capture people's attention. Unlike multimedia advertisements on TV, such one-poster based advertisement usually is outdoor and gives static and flat information to watchers. It would be interesting to know how many people are really paying attention to these very expensive advertisement distribution. Additionally, it is possible to provide people who are really interested in an advertisement poster or multimedia asset with more , additional information on the subject of the one-page poster or multi media asset played out.

In case of an Radio Frequency IDentification enabled advertisement board a person can touch the advertisement board with his Near Field Communication enabled mobile phone, further referred to as NFC enabled mobile phone and get more detailed information downloaded on this mobile phone. Such a solution is disadvantageous in that it requires a special device, a NFC enabled mobile phone, which is not in the massive market and it requires the person to touch the board with his phone.

An objective of the present invention is to provide a method, a system or related device for provisioning a person with information associated with an event the person is involved in, in an automatic manner where the information exclusively is provided to the person involved in the event.

According to the present invention, this object is achieved by the method according to claim 1, the system according to claim 3, and a related device according to claim 8.

Indeed, according to the invention, this object is achieved due to the fact that at first, involvement of a person in an event is detected, where the involvement possibly is detected based on an analysis of images on a scene wherein the event is recorded by at least one camera, subsequently a geo-location of the person involved in the event is determined, again possibly based on a 3 dimensional scene recorded by the at least one camera and further, based on the determined geo-location of the person, controlling the provisioning of directional information, such as directional voice, at the determined geo-location of the person involved in the event only, to the person involved in the event.

Hence at first detecting a person that is involved in an event, a geo-location of the detected person involved in the event is determined and subsequently the provisioning of directional voice at the geo-location of the person to the person that is involved in the event is controlled based hereon.

Such an event may be the interest for a multimedia asset e.g. a movie, an informational multimedia asset, an advertisement or any other kind of multimedia asset or even interest for a certain object not being a multimedia asset presented at a presentation board.

An even further alternative event may be any situation wherein additional information is to be provided to a person involved or such event may be a serious or less serious violation of law or on desired behaviour wherein information like a warning or correction is to be provided to a person showing such behaviour.

To determine whether or not a person is involved in an event, e.g. a person is interested in an object such as a multimedia asset presented at a presentation board, this involvement of the person can be determined based on the following:
- the distance between the person and the board may be relevant. Based on the analysis of the scene (depth calculation) using the images on the scene captured by at least one camera, the distance between the person and the presentation board or object can be determined.
- the face/head orientation. Again based on the image processing of the images on the scene captured, it can be determined whether the person is facing towards the board;
- the time period a person is "looking" at the presentation board or object. This parameter can be a threshold customized by users and applicants.

Further, in order to determine the geo-location of the person a calculation of such geo-location may be based on the following:

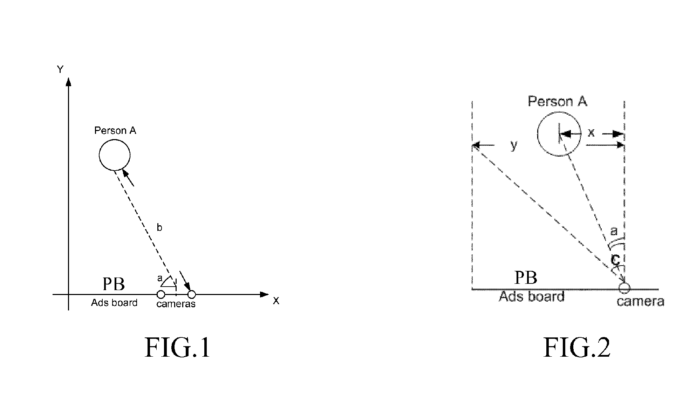

As shown in the figure 1, based on depth calculation from the captured scene, we can retrieve the distance between the person A and the cameras. In the figure, this distance is marked as b. If a time-of-flight camera is used, the distance b is determined by the time the infrared light flies to the Person A and bounce back. In case a stereo pair camera is used, the distance b will be calculated based on the difference between two cameras which determines the geo-location of the person relative to the cameras and/or to the presentation board.

Alternatively, as is shown in figure 2, the orientation angle a can be calculated by the following formula: a = x / y * C, where x is the distance between the person A and the middle point and y is the distance of the maximum range and C is the maximum viewing angle. X, y can be easily measured and C is a known parameter of the camera. So the orientation angle can be determined. The orientation angle together with the distance between the person and the cameras determine the geo-location of the person relative to the cameras and/or to the presentation board.

It is to be noted that the presented algorithm of calculation of depth and orientation angles is one embodiment of algorithms. There may be further alternative algorithms or methods to determine the viewing angle and the distance between the person, person A and the camera's and or the presentation board (adds board).

The provisioning of directional information may be voice conveying information that is based on the event that is detected. The event to be detected is associated with certain predefined information. In case profile information on the person involved in the event is presently available, the information associated even can be personalized to this involved person.

Another characterizing embodiment of the present invention is disclosed in claim 2, claim 4 and claim 9.

The related system and related device further comprise information provisioning means to perform the step to factually provide, under control of a directional information provisioning control means, the information that is associated with the event at the geo-location of the person involved in this event. Such an internal or external information provisioning means IPM could be a directional speaker or alternatively could be a directional message sent to the person via Wi-Fi or Bluetooth or any other wireless technology to a person's mobile communications device or radio. In this manner the information that is associated with the event can be provided to the person involved in the event only.

Another characterizing embodiment of the present invention is disclosed in claim 5 and claim 10.

The event detection means is adapted to detect a person involved in an event based on images covering a scene that includes at least a person involved in the event, where the images that cover the scene are captured by at least one camera.

Another characterizing embodiment of the present invention is disclosed in claim 6 and claim 11.

The event detection means further is adapted to detect a person involved in the event based on at least one of face detection, gaze detection, head tracking of a person of a plurality of persons determined from said images covering said scene being captured by at least one camera. Any other motion or gesture of such person that can be interpreted as showing interest in a certain predefined event may also be applicable for determining whether or not a person is involved in this event.

Another characterizing embodiment of the present invention is disclosed in claim 7 and claim 12.

The location determination means is able to determine a geo-location of the person involved in the event based on the images covering the scene being captured by one or more cameras.

The photo or video images captured by one or more cameras will be used to re-construct the 3-Dimensional model of the scene in front of the presentation board or object. Based on the reconstructed 3-Dimensional scene, the system is able to determine the position of the target person, i.e. the person interested in the event. The geo-location of the target person, i.e. the person interested in the event may be based on the following:

As shown in figure 1, based on depth calculation from the captured scene, we can retrieve the distance between the person and the cameras. In the figure, this distance is marked as b. If a time-of-flight camera is used, the distance b is determined by the time the infrared light flies to the Person A and bounce back. In case a stereo pair camera is used, the distance b will be calculated based on the difference between two cameras which determines the geo-location of the person relative to the cameras and/or to the presentation board.

Alternatively, as is shown in figure 2, the orientation angle a can be calculated by the following formula: a = x / y * C, where x is the distance between the person A and the middle point and y is the distance of the maximum range and C is the maximum viewing angle. X, y can be easily measured and C is a known parameter of the camera. So the orientation angle can be determined and the distance between the person and the cameras, which determines the geo-location of the person relative to the cameras and/or to the presentation board.

It is to be noted that the presented algorithm of calculation of depth and orientation angles is one embodiment of algorithms. There may be further alternative algorithms or methods to determine the viewing angle and the distance between the person, person A and the camera's and or the presentation board (adds board).

In case a single camera is used for capturing images on said scene a depth camera like time of flight camera should be applied in order to determine a geo-location of the person involved in an event. - It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents an overview of the environment wherein the method for provisioning a person with information according to the present invention is executed locally.
Fig. 2 represents an alternative overview of the environment wherein the method for provisioning a person with information according to the present invention is executed locally and a single camera is applied for capturing the scene.
Fig. 3 represents a functional representation of the information provisioning system IPS for use in the environment as presented in FIG. 1.

In the following paragraphs, referring to the drawings, an implementation of the method for provisioning a person with additional information associated with an event according to the present invention is described.

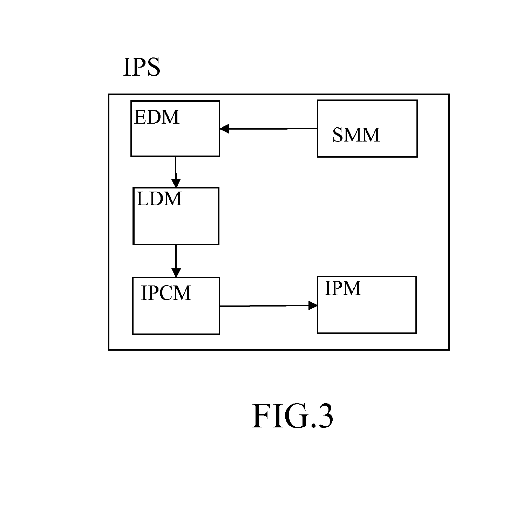

In the first paragraph of this description the main functional parts of the information provisioning system IPS as presented in FIG. 3 is described. In the second paragraph, all connections between the before mentioned means are defined. In the succeeding paragraph the actual execution of the information provisioning system IPS is described.

The information provisioning system comprises an event detection means EDM that is adapted to detect a person involved in an event, a location determination means LDM that is able to determine a geo-location of a person involved in an event detected and a directional information provisioning control means IPCM that is adapted to control the provisioning of the information associated with the event (e.g. directional voice) at the geo-location of the person involved in the detected event. Further the information provisioning system IPS comprises, or alternatively is coupled to, an external information provisioning means IPM that is adapted to provide, under control of the directional information provisioning control means IPCM, the information associated with the event at the geo-location of the person involved in the event. Such an external information provisioning means IPM could be a directional speaker or could be a directional message sent to the person via Wi-Fi or Bluetooth or any other wireless technology to a person's mobile communications device or a radio device.

Additionally the information provisioning system IPS comprises a scene monitoring means SMM that is able to monitor a scene wherein at least one person is present.

Such scene may be the surroundings of the presentation board PB for rendering the multimedia asset or the surrounding of a certain object. Such scene may include one or more people that may or may not be interested in the multimedia asset rendered at the presentation board or be interested in the mentioned object. This monitoring of this scene can be performed by means of a camera capturing images and/or sound at the scene. Alternatively, monitoring of this scene can be performed by means of:
1. ultrasound technology used to detect the movement of surroundings (http://www.popularmechanics.com/technology/gadgets/home-theater/next-up-in-kinect-style-motion-sensing-ultrasound-9118795?click=pm latest)
2. infrared cameras, depth camera such as time of flight camera
3. RFID technology to detect/monitor surroundings based on proximity.

Alternatively such scene monitoring means SMM could be located externally to said information provisioning system.

The scene monitoring means SMM is also coupled with an output to an input of the event detection means EDM. The coupling between the scene monitoring means SMM and the event detection means EDM may be an internal coupling in case of an incorporated scene monitoring means SMM or coupled over an external communications link in case of an externally located scene monitoring means SMM.

The event detection means EDM further has an output-terminal that is coupled to an input terminal of the location determination means LDM that in turn has an output-terminal that is coupled to an input terminal of the directional information provisioning control means IPCM. The directional information provisioning control means IPCM is coupled to the information provisioning means IPM over an internal coupling in case of an incorporated information provisioning means IPM or coupled over an external communications link in case of an externally located information provisioning means IPM.

In order to explain one particular incarnation of the invention and the execution of the present invention it is supposed that a presentation board PB is located at a certain location. In front of this board it is assumed that there is a scene with one or more persons. Furthermore, it is supposed that a single person A from the one or more people pays attention to the multimedia asset as presented on the presentation board PB or the mentioned object.

Additionally, it is assumed that the scene monitoring means SMM, in this case being a set of cameras mounted on top of the presentation board PB, monitor the scene in front of the presentation board PB, in which scene a small group of people, including person A, is present. Each camera of the scene monitoring means SMM captures images and optionally sound on the scene, which scene includes the small group of people.

The event detection means EDM then detects the single person A, that is involved in an event, i.e. is interested in the multimedia asset as rendered on the presentation board PB as person A is looking at the presented multimedia asset for some time, hence his face is directed towards the screen and his eyes are focused at the screen.

The event detection means EDM e.g. detects the interested person A based on the captured images on the scene (that are captured by the set of cameras) in front of the presentation board PB. The event detection means EDM analyzes the images captured in order to detect someone interested by searching for a face looking in direction of the advertisement board by means of face detection, for detecting the gazing of person in the scene, for head tracking of a person of a plurality of persons determined etc.

To determine whether or not a person is involved in an event, e.g. a person is interested in an object such as a multimedia asset presented at a presentation board, this involvement of the person can be determined based on the following:
- the distance between the person and the board may be relevant. Based on the analysis of the scene (depth calculation) using the images on the scene captured by at least one camera, we can determine the distance between the person and the board.
- the face/head orientation. Again based on the image processing of the images on the scene captured, it can be determined whether the person is facing towards the board;
the time period a person is "looking" at the presentation board or object. This parameter can be a threshold customized by users and applicants.

Alternatively, person A may express his interest for the presented multi-media asset by making a pointing gesture toward the presentation board.

In this case, if one or more persons are detected to be involved in the event detected, as they are found to be interested in the presentation the location, i.e. the geo-location, of such interested person is to be determined. In order to determine the geo-location of such person being involved in the event detected, i.e. the person being interested in the multimedia asset rendered at the location determination means LDM determines a geo-location of a person involved in an event detected, again based on the captured images on the scene (that, for example, are captured by the set of cameras) near the presentation board PB. The event detection means EDM analyzes the images captured in order to re-construct a 3-Dimensional model of the scene in front of the presentation board PB. Based on this reconstructed 3-Dimensional scene, the system is able to determine the position of the target person.

In order to determine the geo-location of the person a calculation of such geo-location may be based on the following: as shown in the figure 1, based on depth calculation from the captured scene, the distance between the person and the cameras can be retrieved. In the figure, this distance is marked as b. If a time-of-flight camera is used, the distance b is determined by the time the infrared light flies to the Person A and bounce back. In case a stereo pair camera is used, the distance b will be calculated based on the difference between two cameras which determines the geo-location of the person relative to the cameras and/or to the presentation board.

Alternatively, as is shown in figure 2, in case a single camera is used for capturing the scene the orientation angle a can be calculated by the following formula: a = x / y * C, where x is the distance between the person A and the middle point and y is the distance of the maximum range and C is the maximum viewing angle. X, y can be easily measured and C is a known parameter of the camera. So the orientation angle can be determined and the distance between the person and the cameras, which determines the geo-location of the person relative to the cameras and/or to the presentation board.

It is to be noted that the presented algorithm of calculation of depth and orientation angles is one embodiment of algorithms. There may be further alternative algorithms or methods to determine the viewing angle and the distance between the person, person A and the camera's and or the presentation board (adds board).

Subsequently, after determining, by means of the location determination means LDM, the geo-location of the person involved in the event, the location determination means forwards the determined geo-location towards the directional information provisioning control means IPCM that will receive the determined geo-location of the person and subsequently control the provisioning of the additional information that is associated with the event at the geo-location of the person involved in the detected event. In this manner the information that is associated with the event can be provided to the person involved in the event only.

The additional information is actually related to the information shown on the board PB. It can be stored at the presentation board PB by means of a memory e.g. a chip memory or stored in the network somewhere. In case of storage of the additional information at the network, a network connection has to be provided on board as well. The content of the additional information can be the same to everyone or be different and customized to individuals based on the kind of detection technologies that is used. In case the detection technology is able to identify the profile of the person, a customized additional information is best suited for him can be provided to the [person interested. Otherwise, only general additional information can be provided.

Applicable technologies that facilitate the obtaining profile info on a person so that additional information can be personalized may be:
1. face recognition based on captured images to identify who the person is
2. based on Wi-Fi or Bluetooth link to identify the mobile ID of the person (SIM id), which is also somewhat unique
3. based on finger print to identify a person. In this case the user has to touch the board
4. RFID or alike technologies

Further, the external information provisioning means IPM being coupled to the directional information provisioning control means IPCM that provides, under control of the directional information provisioning control means IPCM, the additional information that is associated with the event at the geo-location of the person involved in the event.

Hence, the an external information provisioning means IPM send the additional information associated with the event at the geo-location of the person involved in the event by means of directional voice to person A only.

Alternatively the information provisioning means IPM may provide the additional information by means of a directional message sent to the person via Wi-Fi or Bluetooth or any other wireless technology to a person's mobile communications device or a radio device.

Person A is watching a multi-media asset being presented at the presentation board PB which watching is detected by the event detection means EDM based on an analysis made on the captured images, subsequently the location determination means LDM determines the geo-location of person Again based on the captured images wherefrom a 3-Dimensional model of the scene in front of the presentation board is generated. Based on the determined geo-location the external information provisioning means IPM provides, under control of the directional information provisioning control means IPCM, the additional information that is associated with the event at the geo-location of the person involved in the event where the additional information is a directional voice telling person background information on the multimedia asset. Consequently, the voice message is only sent to the right person being person A without disturbing other people around.

In case the multimedia asset is an advertisement, while the interested person is reading some more details or watching the figure inside the advertisement, a voice message is sent to the person with extra information on the advertisement like information on sellers in the area.

Alternatively, such an event may be the interest for a multimedia asset e.g. a movie, an informational multimedia asset, an advertisement or any other kind of multimedia asset or even interest for a certain object not being a multimedia asset presented at a presentation board.

An even further alternative event may be any situation wherein additional information is to be provided to a person involved or such event may be a serious or less serious violation of law or on desired behaviour wherein information like a warning or correction is to be provided to a person showing such behaviour.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for provisioning a person with information associated with an event, **CHARACTERISED IN THAT** said method comprises the steps of:
a. detecting a person involved in said event; and
b. determining a geo-location of said person involved in said event; and
c. controlling provisioning directional information at said geo-location of said person involved in said event only.

2. Method according to claim 2, **CHARACTERIZED IN THAT** said method further comprises the step of provisioning under control of said directional information provisioning control means (IPCM), said information associated with said event only at said geo-location of said person involved in said event.

3. System for provisioning a person with information associated with an event, **CHARACTERISED IN THAT** said system comprises:
a. an event detection means (EDM) adapted to detect a person involved in said event; and
b. location determination means (LDM), adapted to determine a geo-location of said person involved in said event; and c. a directional information provisioning control means (IPCM), adapted to control provisioning of said information associated with said event at said geo-location of said person involved in said event only.

4. System according to claim 3, **CHARACTERIZED IN THAT** said system further comprises an information provisioning means (IPM), adapted to provide, under control of said a directional information provisioning control means (IPCM), said information associated with said event only at said geo-location of said person involved in said event.

5. System according to claim 3 or claim 4, **CHARACTERIZED IN THAT** said event detection means (EDM) is adapted to detect a person involved in said event based on images on a scene including at least said person involved in said event, said images being captured by at least one camera.

6. System according to claim 5, **CHARACTERIZED IN THAT** said event detection means (EDM) is adapted to detect a person involved in said event based on at least one of face detection, gaze detection, head tracking of a person of a plurality of persons determined from said images covering said scene being captured by at least one camera.

7. System according to claim 3, **CHARACTERIZED IN THAT** said location determination means (LDM), is able to determine a geo-location of said person involved in said event based on said images covering said scene being captured by said at least one camera.

8. Device for provisioning a person with information associated with an event, **CHARACTERISED IN THAT** said device comprises:
a. an event detection means (EDM) adapted to detect a person involved in said event; and
b. location determination means (LDM), adapted to determine a geo-location of said person involved in said event; and
c. a information provisioning control means (IPCM), adapted to control provisioning of said information associated with said event at said geo-location of said person involved in said event only.

9. Device for provisioning a person with information associated with an event according to claim 8, **CHARACTERISED IN THAT** said device further comprises:
d. an information provisioning means (IPM), adapted to provide, under control of said a directional information provisioning control means (IPCM), said information associated with said event at said geo-location of said person involved in said event.

10. Device for provisioning a person with information associated with an event according to claim 8 or 9 , **CHARACTERISED IN THAT** said event detection means (EDM) is adapted to detect a person involved in said event based on images on a scene including at least said person involved in said event, said images being captured by at least one camera.

11. Device for provisioning a person with information associated with an event according to claim 10, **CHARACTERISED IN THAT** said event detection means (EDM) is adapted to detect a person involved in said event based on at least one of face detection, gaze detection, head tracking of a person of a plurality of persons determined from said images covering said scene being captured by at least one camera.

12. Device for provisioning a person with information associated with an event according to claim 8, **CHARACTERISED IN THAT** said location determination means (LDM) is able to determine a geo-location of said person involved in said event based on said images covering said scene, said images being captured by said at least one camera.
